# EUROPÄISCHE PATENTANMELDUNG

(11) **EP 1 635 589 A1**
(43) Veröffentlichungstag der Anmeldung: **15.03.2006**
(21) Anmeldenummer: 04021577.4
(22) Anmeldetag: 10.09.2004
(51) Int. Cl.: H04Q 7/36

(54) **Verfahren zum Betrieb eines Funkkommunikationssystems mittels unterschiedlicher Strahlformungsverfahren**

(71) Anmelder: SIEMENS AKTIENGESELLSCHAFT, 80333 München (DE)
(72) Erfinder: Banerjee, Mohor, 700033 Calcutta West Bengal (IN); Schmidt, Malte, 46397 Bocholt (DE)

(57) **Zusammenfassung**

Das Verfahren zum Betrieb eines Funkkommunikationssystems sieht vor, dass Verbindungen von und/oder zu Teilnehmerstationen MS1, MS2 mit gerichteten Strahlen OBn, Bm betrieben werden. Für wenigstens eine der Teilnehmerstationen MS1, MS2 wird in Abhängigkeit von Eigenschaften der jeweiligen Teilnehmerstation und/oder der jeweiligen Verbindung individuell bestimmt, mittels welchen Strahlformungsverfahrens mit ihr kommuniziert wird.

## Beschreibung

Die Erfindung betrifft ein Verfahren zum Betrieb eines Funkkommunikationssystems, bei dem Verbindungen von und/oder zu Teilnehmerstationen mittels gerichteter Strahlen betrieben werden sowie eine Vorrichtung für ein solches Funkkommunikationssystem.

Im Funkkommunikationssystemen erfolgt eine Kommunikation mittels elektromagnetischer Wellen über eine Luftschnittstelle. Eine Art von Funkkommunikationssystemen sind Mobilfunksysteme, wie beispielsweise GSM (Global System of Mobile Communication) oder UMTS (Universal Mobile Telecommunication Standard). In Funkkommunikationssystemen können einer Verbindung zugeordnete Signale von einer sendenden Station mittels omnidirektionaler Antennen, d.h. in alle Richtungen, ausgesendet werden, unabhängig davon, wo sich die entsprechende empfangende Station befindet. Ebenso ist es möglich, zum Empfang omnidirektionale Antennen einzusetzen, so dass es unerheblich ist, aus welcher Himmelsrichtung das Signal am Empfänger eintrifft. Jedoch ist es oftmals erwünscht, um Interferenzen im Funkkommunikationssystem gering zu halten oder die Gesamtsendeleistung zu reduzieren, statt omnidirektionaler Antennen gerichtete Antennen einzusetzen. Gerichtete Antennen sind in der Lage, gerichtete Empfangsstrahlen bzw. Sendestrahlen auszubilden. Hierzu weisen sie in der Regel mehrere Antennenelemente auf, denen im Fall einer Sendeantenne das jeweilige zu sendende Signal in jeweils unterschiedlichen Phasenlagen zugeführt wird.

Eine Möglichkeit, eine Funkkommunikation mittels gerichteter Strahlen zu realisieren, besteht darin, die relative Position des jeweils anderen Kommunikationspartners zum eignen Standort zu ermitteln und den entsprechenden Empfangsstrahl bzw. Sendestrahl dorthin auszurichten. Im Falle von mobilen Funkstationen kann dann die Ausrichtung des Strahles fortlaufend angepasst werden, um die Kommunikation weiter zu gewährleisten. Eine alternative Möglichkeit besteht darin, ein so genanntes grid of beams einzusetzen, das aus einer Mehrzahl von gerichteten Strahlen besteht, deren Richtung jedoch im vorhinein festgelegt ist und nicht an die jeweilige Verbindung angepasst wird. Derartige grid of beams können z.B. Strahlen aufweisen, die zueinander einen jeweils konstanten Winkelabstand haben. Beim grid of beams handelt es sich somit um einen Kompromiss zwischen dem Einsatz einer omidirektionalen Antenne und einer gerichteten Antenne.

Das grid of beams Verfahren und das Verfahren mittels eines gerichteten Strahls, der an die Bewegungen der jeweiligen Funkstationen angepasst wird, sind Verfahren, bei denen gerichtete Strahlen zum Einsatz kommen, die abhängig von der Position der Teilnehmerstation sind.

Weiterhin ist es möglich, dass so genannte opportunistische (opportunistic) beamforming einzusetzen. Auch bei diesem erfolgt die Kommunikation mittels gerichteter Strahlen.Beim opportunistischen beamforming kommen allerdings keine Strahlformungsmuster zum Einsatz, deren Strahlen abhängig von der Position der Teilnehmerstationen sind. Die Strahlformungsmuster können z.B. zufallserzeugt oder pseudozufällig erzeugt sein. Beim opportunistischen beamforming, dass beispielsweise in Viswanath et al.: OPPORTUNISTIC BEAMFORMING USING DUMB ANTENNAS, IEEE TRANSACTIONS ON INFORMATION THEORY, VOL. 48, NO. 6, JUNE 2002, Seiten 1277 ff. beschrieben ist, werden zeitlich aufeinander folgend unterschiedliche Strahlformungsmuster für die Übertragung der Signale von in der Regel mehreren Verbindungen genutzt, auch wenn sich die Teilnehmerstationen überhaupt nicht bewegen. Dabei wird jedes der zeitlich aufeinander folgenden Strahlformungsmuster für eine gewisse Zeit konstant gehalten, bevor zum nächsten Strahlformungsmuster gewechselt wird. Beim opportunistischen beamforming wird wenigstens einem Teil der Verbindungen Übertragungskapazität innerhalb eines gerichteten Strahls des jeweiligen aktuell gültigen Strahlformungsmusters zugeordnet. Die Zuteilung der Funkressourcen erfolgt dabei abhängig davon, welche Signalqualität, ermittelt beispielsweise durch das SINR (Signal to Interference plus Noise Ratio), die jeweils an der Kommunikation beteiligten Funkstationen für ihre Verbindung feststellen. Das Umschalten zwischen den aufeinander folgenden Strahlformungsmustern führt für jede Verbindung zu Kanaländerungen die man sich im Sinne einer Mehrteilnehmerdiversität zunutze machen kann. Handelt es sich insbesondere um ein zellulares Mobilfunksystem, in dem das opportunistische beamforming in jeder Funkzelle durchgeführt wird, hängt die Interferenz an einer bestimmten Teilnehmerstation davon ab, wie sich die Strahlformungsmuster der eignen Zelle und der Nachbarzellen ändern. Dabei ist die Sequenz der Strahlformungsmuster in jeder Nachbarzelle vorzugsweise unterschiedlich. Da alle ihre Strahlformungsmuster sich von Zeit zu Zeit ändern, erhöht sich die Wahrscheinlichkeit, dass eine Teilnehmerstation auch einmal gute Interferenzbedingungen vorfindet.

Der Erfindung liegt die Aufgabe zu Grunde, ein Verfahren zum Betrieb eines Funkkommunikationssystems anzugeben, bei dem vorteilhaft eine Funkkommunikation mittels gerichteter Strahlen realisiert ist.

Diese Aufgabe wird mit einem Verfahren und einer Vorrichtung für ein Funkkommunikationssystem gemäß den unabhängigen Ansprüchen gelöst. Vorteilhafte Ausführungsformen und Weiterbildungen der Erfindung sind Gegenstand abhängiger Ansprüche.

Beim erfindungsgemäßen Verfahren zum Betrieb eines Funkkommunikationssystems, bei dem Verbindungen von und/oder zu Teilnehmerstationen mittels gerichteter Strahlen betrieben werden, wird für wenigstens eine der Teilnehmerstationen in Abhängigkeit von Eigenschaften der jeweiligen Teilnehmerstation und/oder der jeweiligen Verbindung individuell bestimmt, mittels welchen Strahlformungsverfahrens mit ihr kommuniziert wird.

Dies hat den Vorteil, dass dasjenige Strahlformungsverfahren für die jeweilige Verbindung ausgewählt werden kann, dass für die jeweilige Verbindung und/oder für alle betrachteten Verbindungen insgesamt die größten Vorteile bietet. So hat sich beispielsweise gezeigt, dass das opportunistische beamforming in vielen Fällen zu einer gesteigerten Verbindungsqualität aufgrund der Absenkungen von Interferenzen führt, dass aber dies in bestimmten Fällen gerade nicht erreicht wird. Dieses ist beispielsweise der Fall, wenn es um Echtzeitanwendungen geht wie z.B. Videokonferenzen oder Sprachverbindungen. Aufgrund der während einer bestehenden Verbindung wechselnden Strahlformungsmuster beim opportunistischen beamforming kann nämlich nicht garantiert werden, dass jeder Verbindung eine bestimmte konstante minimale Datenrate zur Verfügung gestellt wird. Für die genannten Echtzeitanwendungen wie Video- oder Sprachübertragung ist es daher sinnvoll, statt des opportunistischen beamformings, das weiterhin zeitgleich für andere Verbindungen verwendet werden kann, gerichtete Strahlen zu verwenden, die abhängig von der Position der betreffenden Teilnehmerstation sind. Dies kann beispielsweise mittels des grid of beams-Verfahrens oder einen in Abhängigkeit von der Bewegung der beteiligten Funkstationen gesteuerten gerichteten Strahl erfolgen.

Daher sieht eine Weiterbildung der Erfindung vor, dass für die wenigstens eine Teilnehmerstationen individuell bestimmt wird, ob mit ihr kommuniziert wird, indem ein erstes Strahlformungsverfahren verwendet wird, bei dem gerichtete Strahlen von mehreren zeitlich aufeinander folgenden, Strahlformungsmustern verwendet werden, die unabhängig von der Position der Teilnehmerstation sind, oder indem ein zweites Strahlformungsverfahren verwendet wird, bei dem wenigstens ein gerichteter Strahl verwendet wird, der abhängig von der Position der Teilnehmerstation ist.

Nach einer ersten Ausführungsform der Erfindung erfolgt die Auswahl des Strahlformungsverfahrens in Abhängigkeit von einer für die jeweilige Verbindung geforderten Servicequalität. Dies ermöglicht die bereits oben erläuterte Auswahl des Strahlformungsverfahrens beispielsweise in Abhängigkeit davon, ob es sich um eine Echtzeitübertragung oder um eine sonstige Übertragung handelt, bei der Verzögerungen bei der Übertragung unerheblich sind, wie dies beispielsweise beim Herunterladen von Daten aus dem Internet der Fall ist.

Nach einer Weiterbildung der ersten Ausführungsform wird die für die Verbindung geforderte Servicequalität anhand von Parametern, die beim Verbindungsaufbau zwischen der Teilnehmerstation und einer netzseitigen Station ausgetauscht werden, bestimmt. Beispielsweise erfolgt in zellularen Mobilfunknetzen typischerweise eine Anforderung einer Verbindung mit einer bestimmten Servicequalität (Quality of Service) durch eine Teilnehmerstation bei einer netzseitigen Einheit. Der für die Servicequalität relevante Teil dieser Anforderung enthält Parameter wie beispielsweise die Verkehrsklasse (Traffic class, wie beispielsweise conversational, interactive, streaming und Echtzeit) und maximale und garantierte Datenraten. Derartige Parameter werden bislang lediglich zum Zwecke des Routings oder der Ressourcenplanung (scheduling) verwendet. Die Erfindung sieht nun erstmals vor, dass derartige Servicequalitätsinformationen dazu verwendet werden, um von unterschiedlichen möglichen Strahlformungsverfahren für die jeweilige Verbindung ein bestimmtes Strahlformungsverfahren auszuwählen.

Eine alternative Weiterbildung der ersten Ausführungsform der Erfindung sieht vor, dass die Servicequalität anhand einer Auswertung von von der und/oder zu der jeweiligen Teilnehmerstation zu übertragenden Daten bestimmt wird. Dies ist insbesondere dann nützlich, wenn im Funkkommunikationssystem kein wie oben geschilderter Prozess zur Anforderung bzw. Gewährung einer bestimmten Servicequalität existiert. Es ist dann erforderlich, über einen gewissen Zeitraum die Datenübertragung für die jeweils betrachtete Verbindung statistisch auszuwerten. Bei einer Paketdatenübertragung kann dann festgestellt werden, dass Verbindungen, für die eine hohe Dienstqualität gewährleistet sein muss, die Übertragung von Datenpakten mit einer bestimmten Periodizität und/oder mit bestimmter Datenpaketlänge erfolgt. Dies ist beispielsweise der Fall bei Spieleanwendungen, die sehr verzögerungssensitiv sind, jedoch deterministisch bezüglich der genannten Periodizität bzw. der Länge der während der Übertragung übertragenen Datenpakete.

Nach einer zweiten Ausführungsform der Erfindung erfolgt die Auswahl des Strahlformungsverfahrens für die jeweilige Verbindung abhängig von einer Geschwindigkeit der jeweiligen Teilnehmerstation. Einen Hauptzweck, opportunistisches beamforming einzusetzen, besteht darin, einen sich schnell ändernden Kanal für jede Verbindung zu erzeugen, um die Vorteile der Mehrteilnehmerdiversität (multi user diversity) möglichst optimal auszunutzen. Die zweite Ausführungsform der Erfindung beruht auf der Erkenntnis, dass Teilnehmer, die sich schnell bewegen, ohnehin schon einen sich schnell ändernden Kanal vorfinden. Da andererseits das opportunistische beamforming darauf basiert, dass jede Teilnehmerstation die Übertragungsqualität ihrer Verbindung ermittelt und an das Funkkommunikationsnetz meldet, das aufgrund dieser Informationen eine Zuteilung von Funkressourcen zu den einzelnen Verbindungen vornimmt, kann das Zutreffen dieser gemeldeten Qualitätswerte im Falle von sich schnell bewegenden Mobilfunkstationen oftmals nicht gewährleistet werden. Daher wäre die Anwendung des opportunistischen beamforming für solche Verbindungen nachteilig, da es nicht zu den gewünschten Ergebnissen führte. Daher ist es vorteilhafter, dass für Verbindungen mit sich schnell bewegenden Teilnehmern gerichtete Strahlen verwendet werden, die von der Position der Teilnehmerstationen abhängen, während sich langsam bewegende Teilnehmer mit während der bestehenden Verbindung mit mehreren aufeinander folgenden Strahlformungsmustern wie beim opportunistischen beamforming versorgt werden können.

Zur Unterscheidung zwischen sich relativ langsam und relativ schnell bewegenden Teilnehmerstationen ist die Festlegung eines Grenzwertes für die Geschwindigkeit sinnvoll, bei dessen Überschreiten positionsabhängige gerichtete Strahlen verwendet werden, bei dessen Unterschreiten jedoch das andere Strahlformungsverfahren verwendet wird. Welchen Wert dieser Grenzwert annimmt, ist abhängig von den jeweiligen Gegebenheiten des betrachteten Funkkommunikationssystems und kann dort am besten experimentell bestimmt werden.

Zum Feststellen der Geschwindigkeit einer Teilnehmerstation kann entweder die Kohärenzzeit des Übertragungskanals oder seine Dopplerspreizung ausgewertet werden. Sich schnell bewegende Teilnehmerstationen werden eine deutlich geringere Kohärenzzeit ihres Übertragungskanals haben, als sich relativ langsam bewegende Teilnehmerstationen. Die Kohärenzzeit ist umgekehrt proportional zur Dopplerspreizung eines Übertragungskanals. Die Bestimmung der Kanalkohärenzzeit bzw. der Dopplerspreizung kann entweder von einer netzseitigen Station für die Übertragungsrichtung zu einer Teilnehmerstation aus den in der umgekehrten Übertragungsrichtung (von der Teilnehmerstation zur netzseitigen Station) übertragenen Signalen bestimmt werden oder durch die Teilnehmerstation. Im letztgenannten Fall speichert während eines festgelegten Zeitraums die Teilnehmerstation die Verzögerungszeit für die zu ihr übertragenen Signale mehrerer Messungen. Danach berechnet sie die Kanalkohärenzzeit bzw. die Dopplerspreizung und übermittelt diese Werte dann zu der netzseitigen Station in ähnlicher Weise, wie sie dies beim opportunistischen beamforming mit den Messwerten der Signalqualität tut. Das Funkkommunikationsnetz kann dann aus den durch die netzseitige Station oder die Teilnehmerstation ermittelten Parametern die Geschwindigkeit der Teilnehmerstation abschätzen und davon abhängig die Art des für die jeweilige Verbindung zu verwendenden Strahlformungsverfahrens bestimmen.

Die erfindungsgemäße Vorrichtung für ein Funkkommunikationssystem, in dem Verbindungen von und/oder zu Teilnehmerstationen mittels gerichteter Stahlen betrieben werden, weist Mittel auf zur individuellen Auswahl von wenigstens zwei Strahlformungsverfahren für die Kommunikation mit wenigstens einer Teilnehmerstation in Abhängigkeit von Eigenschaften der jeweiligen Teilnehmerstation und/oder der jeweiligen Verbindung. Ausführungsformen und Weiterbildungen der Vorrichtung weisen Mittel auf, mit denen die Ausführungsformen und Weiterbildungen des erfindungsgemäßen Verfahrens durchführbar sind.

Die Erfindung wird im Folgenden anhand eines in den Figuren dargestellten Ausführungsbeispiels näher erläutert. Es zeigen:

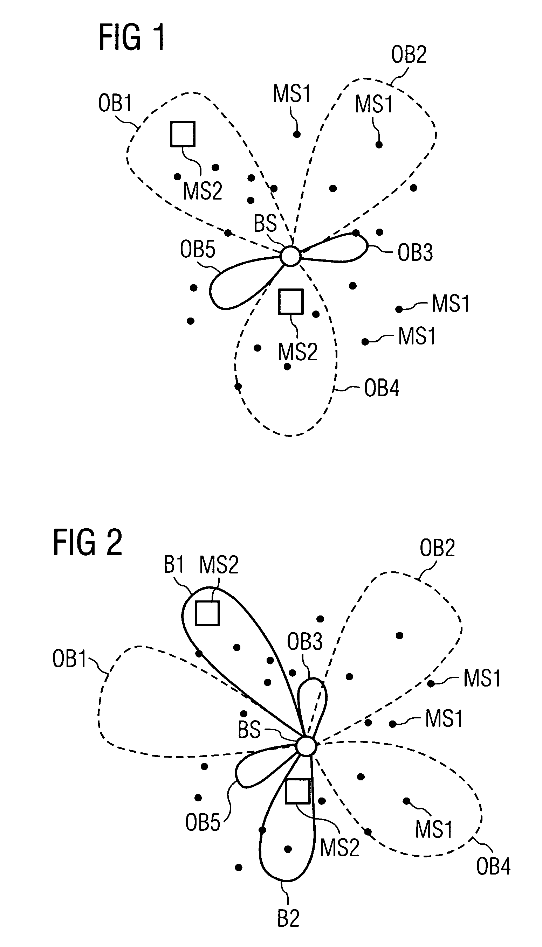

Figur 1 und 2 ein Funkkommunikationssystem, indem eine Kommunikation mittels gerichteter Strahlen erfolgt, zu unterschiedlichen Zeitpunkten.

Figur 1 zeigt eine Basisstation BS, die eine netzseitige Station des betrachteten zellularen Funkkommunikationssystems ist und eine von mehreren Funkzellen des Funkkommunikationssystems versorgt. Es handelt sich in diesem Fall um ein Mobilfunksystem mit mobilen Teilnehmerstationen MS1, MS2. Erste Teilnehmerstationen MS1 sind in Figur 1 und Figur 2 punktförmig dargestellt, während zweite Mobilstationen MS2 quadratisch dargestellt sind. Figur 1 zeigt zunächst den Fall, dass die Basisstation BS mit allen Teilnehmerstationen MS1, MS2 mittels des opportunistischen beamformings kommuniziert. Figur 1 zeigt ein im Sinne des opportunistischen beamformings erzeugtes erstes Strahlformungsmuster, das fünf gerichtete Strahlen OB1 bis OB5 aufweist. Den Teilnehmerstationen MS1, MS2, die sich im Ausbreitungsbereich der gerichteten Strahlen OB1 bis OB5 befinden, wird auf herkömmliche Art, wie beim opportunistischen beamforming üblich, für ihre jeweilige Verbindung eine Übertragungskapazität in Abhängigkeit von Messungen der Empfangssignalqualität an der jeweiligen Teilnehmerstation zugewiesen.

Figur 1 zeigt lediglich ein Strahlformungsmuster. Wie beim opportunistischen beamforming üblich, folgen während zu den Teilnehmerstationen bestehenden Verbindungen mehrere unterschiedliche zufällig erzeugte Strahlformungsmuster zeitlich aufeinander, so dass insgesamt Verbindungen zu allen in Figur 1 dargestellten Teilnehmerstationen MS1, MS2 unterhalten werden können.

Mit allen in Figur 1 dargestellten Teilnehmerstationen MS1, MS2 wird für eine gewisse Zeitspanne mittels des opportunistischen beamforming-Verfahrens kommuniziert. Während dieser Zeitspanne wird auf die weiter oben bereits beschriebene Art durch Ermittlung der Kanalkohärenzzeit bzw. Dopplerspreizung des jeweiligen Kanals für jede Teilnehmerstation MS1, MS2 deren Geschwindigkeit abgeschätzt. Dabei wird im hier betrachteten Fall festgestellt, dass die zweiten Teilnehmerstationen MS2 sich relativ schnell bewegen, während sich die ersten Teilnehmerstationen MS1 relativ langsam bewegen. In Abhängigkeit von dieser Feststellung, die während der folgenden Kommunikation regelmäßig wiederholt wird, erfolgt anschließend eine modifizierte Kommunikation mit den Teilnehmerstationen gemäß Figur 2.

Figur 2 zeigt die Funkzelle der Basisstation BS aus Figur 1 und die Teilnehmerstationen MS1, MS2, nachdem festgestellt wurde, welche der Teilnehmerstationen sich relativ schnell und welche sich relativ langsam bewegen. In Abhängigkeit von diesem Ergebnis erfolgt ab diesem Zeitpunkt eine Kommunikation mit den sich schnell bewegenden zweiten Teilnehmerstationen MS2 mittels gerichteter Strahlen B1, B2, die abhängig von der Position der jeweiligen Teilnehmerstation MS2 sind. Im konkreten Fall erfolgt die Kommunikation mit jeder dieser Teilnehmerstationen MS2 mittels je eines gerichteten Strahls B1, B2, dessen Richtung an die Bewegungen der jeweiligen zweiten Teilnehmerstation MS2 angepasst wird. Für die sich langsam bewegenden ersten Teilnehmerstationen MS1 dagegen erfolgt die Kommunikation weiterhin nach dem opportunistischen beamforming.

Figur 2 zeigt zwei positionsabhängige gerichtete Strahlen B1, B2, über die die Basisstation BS mit den zweiten Teilstationen MS2 kommuniziert. Weiterhin zeigt Figur 2 fünf gerichtete Strahlen OB1 bis OB5, die ein zweites Strahlformungsmuster nach dem opportunistischen beamforming-Verfahren bilden und über die die Basisstation BS mit den ersten, sich langsam bewegenden Teilnehmerstationen MS1 kommuniziert. Selbstverständlich wird auch dieses nicht-positionsabhängige Strahlformungsmuster nach kurzer Zeit durch ein neues zufällig erzeugtes Strahlformungsmuster ersetzt, wie dies nach dem opportunistischen beamforming üblicherweise geschieht.

Wird bei der periodisch durchgeführten Überwachung der Geschwindigkeit der Teilnehmerstationen MS1, MS2 festgestellt, dass eine bislang sich schnell bewegende Teilnehmerstation MS2 sich nunmehr langsam bewegt oder dass umgekehrt eine sich bislang langsam bewegende erste Teilnehmerstation MS1 sich nun schnell bewegt, wird für die jeweilige Verbindung zu der entsprechenden Teilnehmerstation ab diesem Zeitpunkt das jeweils andere Strahlformungsverfahren gewählt.

Die Figuren 1 und 2 können auch dazu dienen, ein zweites Ausführungsbeispiel der Erfindung zu erläutern, bei dem die Wahl eines der beiden Strahlformungsverfahren für die jeweilige Verbindung nicht abhängig von der Geschwindigkeit der Teilnehmerstation erfolgt, sondern abhängig von den für ihre Verbindung erforderliche Dienstqualität. Ist diese notwendige bzw. geforderte Dienstqualität von vornherein bekannt, beispielsweise da diese Dienstqualität beim Verbindungsaufbau zwischen der Teilnehmerstation und der Basisstation BS vereinbart wird, kann von vornherein gemäß Figur 2 verfahren werden. Das bedeutet, dass mit zweiten Teilnehmerstationen MS2, für die eine hohe Dienstqualität gefordert wird, beispielsweise eine Datenübertragung in Echtzeit wie beispielsweise eine Videoübertragung, nur mittels Teilnehmerpositionsabhängigen gerichteten Strahlen kommuniziert wird, während mit den ersten Teilnehmerstationen MS1, für die nur geringe Anforderungen hinsichtlich der Dienstqualität bestehen (wenn es sich beispielsweise um eine Nicht-Echtzeitanwendung handelt) mittels des opportunistischen beamformings, also der gerichteten Strahlen OB1 bis OB5 aus Figur 2, kommuniziert wird.

Ist die geforderte Dienstqualität jedoch nicht von vornherein dem Funknetz bekannt, da sie nicht bei Verbindungsaufbau zwischen ihm und den Teilnehmerstationen MS1, MS2 vereinbart wird, ist eine netzseitige Vorrichtung vorhanden (in den Fig. 1 und 2 nicht dargestellt), die während einer Kommunikation gemäß Figur 1, bei der alle Verbindungen in der Funkzelle der Basisstation BS mittels opportunistischen beamformings bedient werden, die Übertragung von Datenpaketen über die jeweilige Verbindung statistisch auswertet. Stellt diese netzseitige Vorrichtung, die beispielsweise Bestandteil eines Funknetzcontrollers sein kann, dem die Basisstation BS zugeordnet ist, fest, dass von und/oder zu einer der zweiten Teilnehmerstationen MS2 Datenpakete mit einer bestimmten Periodizität und/oder mit einer festen, d.h. nicht schwankenden, Datenlänge übertragen werden, schließt sie darauf, dass es sich um eine Verbindung handelt, für die eine relativ hohe Dienstqualität gefordert ist. Für alle übrigen Verbindungen nimmt sie dies nicht an. Sobald diese Feststellung getroffen worden ist, wird dann auf die bereits oben erläuterte Art gemäß Figur 2 verfahren, d.h. mit den zweiten Teilnehmerstationen MS2, für die eine erhöhte Dienstqualität angenommen wird, wird mittels positionsabhängier gerichteter Strahlen B1, B2 kommuniziert (die vorzugsweise der Bewegung der zweiten Teilnehmerstationen MS2 folgen) und mit den anderen, ersten Teilnehmerstationen MS1 gemäß dem opportunistischen beamforming-Verfahren. Selbstverständlich wird bei diesem Ausführungsbeispiel die Ermittlung bzw. Abschätzung der geforderten Dienstqualität für jede Verbindung entweder periodisch oder fortlaufend überprüft und ggf. das der jeweiligen Verbindung zugeordnete Strahlformungsverfahren geändert.

## Patentansprüche

1. Verfahren zum Betrieb eines Funkkommunikationssystems, bei dem
- Verbindungen von und/oder zu Teilnehmerstationen (MS1, MS2) mittels gerichteter Strahlen (OBn, Bm) betrieben werden
- und für wenigstens eine der Teilnehmerstationen (MS1, MS2) in Abhängigkeit von Eigenschaften der jeweiligen Teilnehmerstation und/oder der jeweiligen Verbindung individuell bestimmt wird, mittels welchen Strahlformungsverfahrens mit ihr kommuniziert wird.

2. Verfahren nach Anspruch 1, bei dem
für die wenigstens eine Teilnehmerstation (MS1, MS2) individuell bestimmt wird, ob mit ihr kommuniziert wird, indem
- ein erstes Strahlformungsverfahren verwendet wird, bei dem gerichtete Strahlen (OBn) von mehreren zeitlich aufeinander folgenden, Strahlformungsmustern verwendet werden, die unabhängig von der Position der Teilnehmerstation sind,
- oder ein zweites Strahlformungsverfahren verwendet wird, bei dem gerichtete Strahlen (Bm) verwendet werden, die abhängig von der Position der Teilnehmerstation sind.

3. Verfahren nach Anspruch 2, bei dem
das Strahlformungsverfahren mit den zeitlich aufeinander folgenden Strahlformungsmustern das sogenannte "Opportunistic Beamforming" ist.

4. Verfahren nach einem der vorstehenden Ansprüche, bei dem
die Auswahl des Strahlformungsverfahrens abhängig von einer für die jeweilige Verbindung geforderten Servicequalität durchgeführt wird.

5. Verfahren nach Anspruch 4, bei dem
die geforderte Servicequalität anhand von Parametern, die beim Verbindungsaufbau zwischen der Teilnehmerstation (MS1, MS2) und einer netzseitigen Station (BS) ausgetauscht werden, bestimmt wird.

6. Verfahren nach Anspruch 4, bei dem
die Servicequalität anhand einer Auswertung von von der und/oder zu der jeweiligen Teilnehmerstation (MS1, MS2) übertragenen Daten bestimmt wird.

7. Verfahren nach einem der Ansprüche 1 bis 3, bei dem
die Auswahl des Strahlformungsverfahrens abhängig von einer Geschwindigkeit der jeweiligen Teilnehmerstation (MS1, MS2) durchgeführt wird.

8. Vorrichtung für ein Funkkommunikationssystem, in dem Verbindungen von und/oder zu Teilnehmerstationen (MS1, MS2) mittels gerichteter Strahlen (OBn, Bm) betrieben werden,
mit Mitteln zur individuellen Auswahl eines von wenigstens zwei Strahlformungsverfahren für die Kommunikation mit wenigstens einer Teilnehmerstation (MS1, MS2) in Abhängigkeit von Eigenschaften der jeweiligen Teilnehmerstation und/oder der jeweiligen Verbindung.
